# EUROPÄISCHE PATENTSCHRIFT

(11) **EP 0 624 458 B1**
(45) Veröffentlichungstag und Bekanntmachung des Hinweises auf die Patenterteilung: **03.12.1997**
(21) Anmeldenummer: 94810248.8
(22) Anmeldetag: 02.05.1994
(51) Int. Cl.: B31B 23/00, B31B 37/00, B29C 65/18, B29C 65/00

(54) **Verfahren und Vorrichtung zur Herstellung von Folienbeuteln, insbesondere für Getränke und Lebensmittel**
Method and apparatus for manufacturing bags out of a plastics film, especially for beverages and foodstuffs
Procédé et appareil pour la fabrication de sacs en matière plastique, sous forme de feuilles, en particulier pour des boissons et de la nourriture

(30) Priorität: 30.04.1993 CH 1323/93
(43) Veröffentlichungstag der Anmeldung: 17.11.1994
(73) Patentinhaber: Water-Line S.A., CH-6805 Mezzovico (CH)
(72) Erfinder: Colla, Tiziano, CH-6900 Lugano (CH)
(74) Vertreter: Münch, Otto

(56) Entgegenhaltungen:
- EP-A- 0 285 904
- DE-B- 1 033 021
- FR-A- 2 339 486
- US-A- 3 106 502
- US-A- 3 909 334
- US-A- 4 030 956
- US-A- 4 230 029
- PATENT ABSTRACTS OF JAPAN vol. 12, no. 376 (M-750) (3223) 7. Oktober 1988 & JP-A-63 126 726 (YAMAMOTO BINITAA) 30. Mai 1988

## Beschreibung

Die meisten Kunststoff-Folienbeutel für Lebensmittel und Getränke werden aus einer flachen Folie hergestellt, indem diese Folie um einen hohlen Dorn mit einer Längsnaht zu einem Schlauch geformt wird. Schrittweise werden Quersiegelnähte gebildet und die gefüllten Beutel abgetrennt. Durch den Dorn wird der nächste Beutel gefüllt. Dieses Verfahren und diese Vorrichtungen sind sehr rationell. Allerdings ist es aufwendig, mit diesem Verfahren aseptische Beutel herzustellen, weil die offenen Folien nicht steril sind.

Wenn der Beutelinhalt lange haltbar sein muss und kein Konservierungsmittel enthält, sind deshalb das obige Verfahren und die obige Vorrichtung wenig geeignet. Für Trinkwasserbeutel ist es bekannt, bei der Herstellung des Beutels von einem geschlossenen Folienschlauch auszugehen. Bei der Herstellung des Folienschlauches hat dieser nämlich eine Temperatur von etwa 200° Celsius. Seine Innenwand ist deshalb steril, aseptisch. Dieser Folienschlauch wird durch Quersiegelnähte versiegelt. Die Einzelbeutel werden dann benachbart diesen Quersiegelnähten abgetrennt. In einer separaten Füllvorrichtung werden die Beutel gefüllt und schliesslich oben mit einer zweiten Quersiegelnaht versiegelt. Mit diesem Verfahren lassen sich aseptische Beutel herstellen. Allerdings ist das Verfahren langsam und wenig flexibel in der Beutelgrosse.

Aus der DE-A-1 033 021 ist ein Verfahren zum Herstellen von Beuteln aus einem geschlossenen Schlauch mit zwei einwärts gefalteten Bodenfalten bekannt. Der Schlauch wird zuerst quer versiegelt, anschliessend in der Mitte der Quersiegelnähte durchgetrennt und die so gebildeten Doppelbeutel in Transportrichtung der Folienbahn in zwei Einzelbeutel getrennt. Die Querversiegelung und Quertrennung erfolgt anscheinend mit auf Walzen umlaufenden Siegelbacken und Trennmessern. Diese Art der Siegelung ist nicht für alle Materialien geeignet. Um Beutel unterschiedlicher Breite herzustellen, müssen jeweils die Walzen ausgewechselt werden.

Aus der US-A-3 106 502 ist ein Verfahren und eine Vorrichtung zur Herstellung von Beuteln bekannt, bei welchem ebenfalls von einem geschlossenen Folienschlauch ausgegangen wird. Der Schlauch wird über einen flachen Schuh geschoben, welcher oben zwei und unten eine Kerbe hat. In die Kerben greifen Längstrennmesser ein. Die so gebildeten zwei Halbschläuche werden schliesslich mit einer Reihe von durch elektrische Entladung erzeugten Funken gleichzeitig quer zertrennt und quer versiegelt. Durch den Schuh, über welchen der Schlauch gezogen wird, sind die damit gebildeten Beutel allerdings nicht mehr aseptisch.

Der vorliegenden Erfindung liegt die Aufgabe zugrunde, ein Verfahren und eine Vorrichtung anzugeben, mit welchen aseptische Folienbeutel rationell hergestellt werden können. Diese Aufgabe wird durch die Merkmalskombination der Ansprüche gelöst.

Die nach dem erfindungsgemässen Verfahren hergestellten Beutel haben zwei Längssiegelnähte und eine Quersiegelnaht. Im Gegensatz zu den anfangs beschriebenen Beuteln verläuft ihre Längserstreckung quer zur Längserstreckung des ursprünglichen Folienschlauches. Dies bringt eine ganze Reihe wesentlicher Vorteile:
- Es werden gleichzeitig jeweils zwei Beutel hergestellt, sodass die Kapazität der Vorrichtung gegenüber der bekannten Vorrichtung verdoppelt wird.
- Die Breite der Beutel und damit deren Innenvolumen kann sehr leicht an den Bedarf angepasst werden.
- Es können Folienschläuche von wesentlich grösserem Durchmesser verwendet werden. Diese sind im allgemeinen leichter erhältlich.
- Aus einem gegebenen Vorratsrollendurchmesser sind drei-bis viermal so viele Beutel herstellbar. Dadurch vermindert sich das Verhältnis der Totzeit zu den Produktionszeiten.

Nachfolgend wird ein Ausführungsbeispiel der Erfindung anhand der Zeichnungen erläutert. Darin zeigt:
- Figur 1: Eine schematische Seitenansicht einer erfindungsgemässen Vorrichtung,
- Figur 2: einen Schnitt längs der Linie II-II in Figur 1,
- Figur 3: ein Detail aus der Darstellung nach Figur 2,
- Figur 4: einen Schnitt durch einen Folienschlauch, und,
- Figur 5: eine Draufsicht auf den Schlauch mit Siegelnähten.

Auf einem drehbar gelagerten Dorn 10 ist eine Vorratsrolle 11 eines Kunststoff-Folienschlauches 13 aufgesteckt. Die Rolle 11 kann mittels eines Brems-Motors 12, der mit einer auf der Rolle 11 aufliegenden Walze 9 gekoppelt ist, angetrieben oder gebremst werden. Der Folienschlauch 13 wird von der Rolle 11 über zwei gehäusefest gelagerte Umlenkwalzen 14, 15 und eine dazwischen angeordnete, durch ihr Eigengewicht belastete Walze 16 abgezogen. Diese Walzenanordnung bildet einen Speicher 17. Die Walze 16 sitzt auf einem längsgeführten Schlitten 18, dessen Stellung durch einen Analogfühler 19 gemessen wird. Der Fühler 19 bremst oder treibt über ein Schaltgerät 20 den Motor 12 derart, dass der Schlitten 18 durchschnittlich in seiner Mittelstellung ist.

Der Folienschlauch 13 wird durch eine Abzugwalze 26 schrittweise vom Speicher 17 abgezogen. Er wird gegen die Abzugwalze 26 durch eine Druckwalze 25 angepresst. Die Abzugwalze 26 ist durch eine pneumatische Schaltkupplung 27 mit einem permanent drehenden Motor 28 verbunden. Es hat sich erwiesen, dass mit dieser pneumatischen Kupplung 27 ein sehr genau reproduzierbarer Vorschub eingestellt werden kann.

Zwischen den Walzen 15, 25 befindet sich eine Quersiegelbacke 30 mit einer Gegenbacke 31 sowie eine Kühlbacke 32 mit Gegenbacke 33. Die Backen 30, 32 sind durch zwei Pneumatikzylinder gegen die Gegenbacken 31, 33 während der Stillstandsphasen der Abzugwalze 26 angepresst. Der einstellbare Abstand 1 zwischen den Backen 30, 32 ist gleich der Vorschublänge. Die Siegelbacke 30 mit der Gegenbacke 31 erzeugt eine relativ breite Siegelnaht. Dadurch, dass die Siegelnaht anschliessend mit den Kühlbacken 32, 33 abgekühlt wird, ist eine hohe Taktfrequenz möglich. Zwischen den Kühlbacken 32, 33 und der Abzugwalze 26 läuft der Folienschlauch 13 durch ein stationäres, in einer Vertikalebene angeordnetes Messer 40, dessen Schneidkante 41 geneigt ist. Das Messer 40 trennt den Folienschlauch 13 längs seiner Längsmitte in zwei Hälften. Unmittelbar hinter den Walzen 25, 26 befindet sich ein Haltebalken 42 mit einem Gegenhalter 43. Der Balken 42 wird durch zwei weitere Pneumatikzylinder 44 im Takt mit den Backen 30, 32 gegen den Gegenhalter 43 gepresst. Jeweils in den Stillstandphasen läuft ein Schlitten 45 quer zur Transportrichtung A über die Breite des Folienschlauches 13 hinweg. Der Schlitten 45 läuft auf einem stangenlosen Pneumatikzylinder 46, könnte jedoch alternativ auch mittels eines durch einen Motor angetriebenen, endlosen Zahnriemens auf einer Schiene bewegt werden. Der Schlitten 45 trägt ein Messer 47, welches die beiden Folienhälften in Einzelbeutel 48 trennt. Der Schnitt erfolgt jeweils in der Mitte der Siegelnaht 78.

Die Einzelbeutel 48 liegen auf einem Tisch 49 auf und werden dort von je einem Sauggreifer 50 mit zwei Saugnäpfen 51 ergriffen und einer nicht dargestellten Abfüllmaschine übergeben, z.B. durch eine Schwenkbewegung um Achsen 52. In der Abfüllmaschine werden die Beutel 48 gefüllt und schliesslich entlang des mit dem Messer 40 geschnittenen Randes versiegelt.

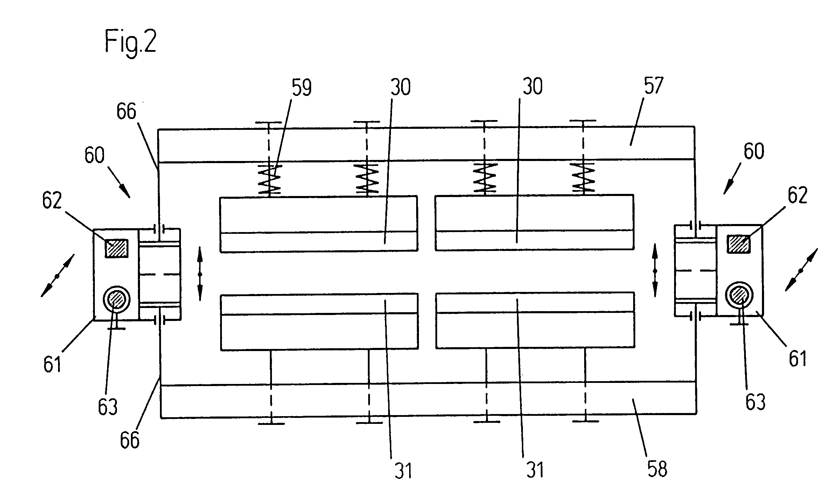

In Figur 2 ist die Siegelbacke 30 und Gegenbacke 31 etwas detaillierter dargestellt. Jede der beiden Backen 31, 32 besteht aus zwei aneinander anschliessenden Backenhälften. Die Backenhälften 31, 32 werden durch je einen Querbalken 57, 58 getragen. Die Gegenbackenhälften 31 sind starr mit dem Balken 58 verbunden. Die Siegelbackenhälften 30 dagegen sind in der Höhe verschiebbar gegenüber den Balken 57. Sie sind durch zwischen den Backenhälften 30 und den Balken 57 eingesetzte, vorgespannte Federn 59 nach unten vorbelastet. Die einstellbare Federvorspannung bestimmt den Anpressdruck der Backen 30, 31. Die beiden Balken 57, 58 werden durch zwei Doppel-Pneumatikzylinder 60 betätigt, die auf Schlitten 61 montiert sind. Die Schlitten 61 sind auf Schienen 62 parallel zur Vorschubrichtung A verschiebbar geführt und können durch Gewindespindeln 63 verschoben werden.

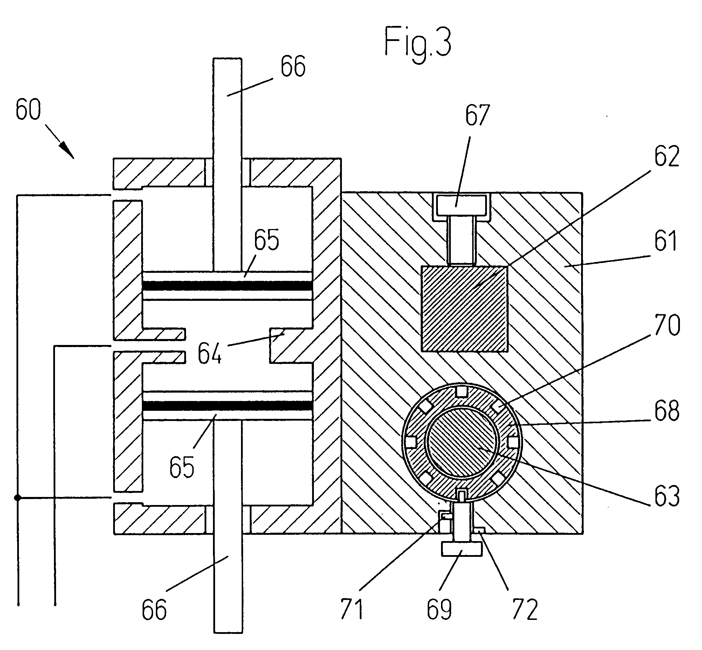

In Figur 3 ist ein Schlitten 61 mit Zylinder 60 etwas detaillierter dargestellt. Der Zylinder 60 hat eine zentrale Anschlagwand 64 und beidseits davon je einen Kolben 65 mit Kolbenstange 66. Jede Kolbenstange 66 trägt einen der Balken 57, 58. Der Schlitten 61 ist durch eine Schraube 67 auf der Schiene 62 arretierbar. Die Spindel 63 ist in ein Muttergewinde in einer zylindrischen Büchse 68 eingeschraubt. Die Büchse 68 ist auf nicht dargestellten Kugellagern im Schlitten 61 drehbar aber axial unverschiebbar gelagert. Ihre Drehstellung kann durch einen Bolzen 69 arretiert werden, der durch eine nicht dargestellte Feder in die gezeigte Blockierstellung vorbelastet ist, in welcher er in eine von mehreren über den Umfang verteilte Bohrungen 70 der Büchse 68 eingreift. Zum Deblockieren kann der Bolzen 69 herausgezogen und um 180° gedreht werden, sodass ein Querstift 71 des Bolzens 69 in einer Rastausnehmung 72 einrastet. Die beiden Spindeln 63 sind durch ein nicht dargestelltes Getriebe, z.B. ein Kegelradgetriebe oder ein Zahnriemengetriebe miteinander und mit einer Kurbel oder einem Motor verbunden, sodass sie synchron miteinander drehen.

Zum Verstellen der Backen 30, 31 oder der Backen 32, 33 werden die betreffenden beiden Arretierschrauben 67 gelöst und die Büchse 69 blockiert. Beim Drehen der Spindeln 63 verschieben sich die beiden Schlitten 61 gleichzeitig. Wenn die gewünschte Stellung erreicht ist, werden die Schrauben 67 angezogen und die Bolzen 69 gelöst. Nun können die beiden andern Schlitten 61 der andern Backen 32, 33 bzw. 30, 31 auf dieselbe Art mit derselben Betätigung (Kurbel oder Motor) in die gewünschte Stellung verschoben werden. Dadurch ist es sehr einfach möglich, die Vorrichtung auf eine andere Beutelbreite und deshalb anderes Füllvolumen einzustellen.

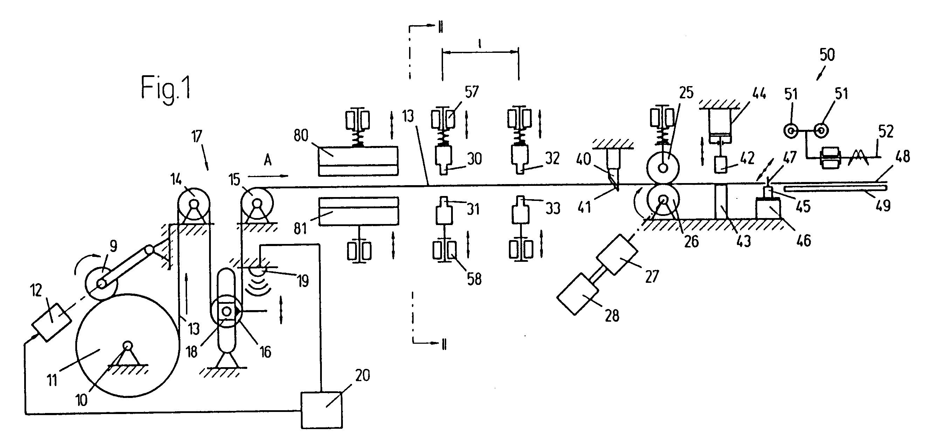

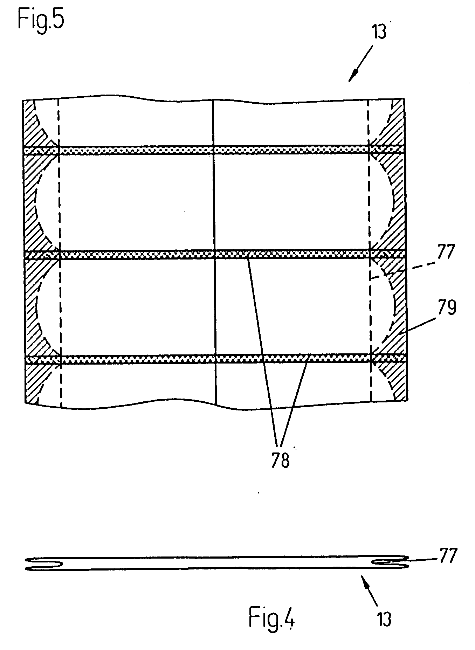

In Figur 4 ist eine Variante des Folienschlauches 13 gezeigt, bei welcher der Schlauch 13 im Bereich seiner Längsränder je eine eingefaltete Längsfalte 77 hat. In Figur 5 ist eine Draufsicht auf einen Schlauch 13 nach der Versiegelung dargestellt. Die Siegelnähte 78 sind durch kreuzschraffierte Bereiche angedeutet. Sie werden durch das Messer 47 in der Mitte durchgetrennt und bilden beim fertigen Beutel 48 zwei Flossen-Längssiegelnähte entlang den beiden Längsrändern des Beutels 48. Mit den schräg schraffierten Bereichen sind zusätzliche, bogenförmige Versiegelungen 79 längs den beiden Längsrändern des Folienschlauches 13 dargestellt. Zur Herstellung dieser zusätzlichen Versiegelungen 79 sind vor oder hinter der Siegelbacke 30 weitere Siegelbacken 80 und Gegenbacken 81 auf zusätzlichen Schlitten 61 in gleicher Weise wie die Backen 30, 31 montiert, die in Figur 1 angedeutet sind. Die Folie des Schlauches 13 besteht aus mehreren Schichten, von welchen die Innerste den tiefsten Schmelzpunkt hat. Die Temperatur der Backen 80, 81 ist so eingestellt, dass nur diese innerste Schicht schmilzt, sodass die eingefaltete Aussenseite der Folie im Bereich der Längsfalten 77 nicht verschweisst wird. Auf diese Weise hergestellte Beutel können aufgestellt werden und bleiben ohne Hilfsmittel stehen.

## Patentansprüche

1. Verfahren zur Herstellung von Beutein (48), insbesondere für Nahrungsmittel oder Getränke, von einem von einer Vorratsrolle (11) abgezogenen Folienschlauch (13), wobei der Folienschlauch (13) zunächst querversiegelt, anschliessend längs seiner Längsmitte in zwei Hälften getrennt und schliesslich die Beutel (48) durch einen Schnitt im Bereich der Quersiegelnähte vom Schlauch (13) abgetrennt werden, und wobei der Folienschlauch (13) schrittweise abgezogen wird.

2. Vorrichtung zur Durchführung des Verfahrens nach Anspruch 1, umfassend:
- Einen Halter (10) zur Aufnahme einer Vorratsrolle (11) eines Folienschlauches (13),
- eine Speichereinheit (17) zum Speichern eines Folienschlauchabschnittes,
- eine Quersiegelbacke (30) und Gegenbacke (31) zur Herstellung einer Siegelnaht (78) quer zur Längserstreckung des Folienschlauches (13),
- eine stromabwärts der Quersiegelbacke (30) angeordnete erste Schneideinrichtung (40) zum Trennen des Folienschlauches (13) längs seiner Längsmitte,
- eine stromabwärts der ersten Schneideinrichtung (40) angeordnete Abzugwalze (26) und eine gegen diese angedrückte Druckwalze (25), wobei die Abzugwalze (26) mit einem intermittierenden Antrieb (27, 28) verbunden ist,
- eine stromabwärts der Abzugwalze (26) angeordnete zweite Schneideinrichtung (45, 46, 47) zum Abtrennen der Beutel (48) mittig durch die Siegelnähte (78), und
- eine Einrichtung (50) zum simultanen Abtransport jeweils zweier Beutel (48).

3. Vorrichtung nach Anspruch 2, wobei der intermittierende Antrieb (27, 28) durch einen Motor (29) und eine pneumatische Schaltkupplung (27) gebildet ist.

4. Vorrichtung nach Anspruch 2 oder 3, wobei der Siegelbacke (30) eine Kühlbacke (32) nachgeschaltet ist.

5. Vorrichtung nach einem der Ansprüche 2 bis 4, wobei die erste Schneideinrichtung (40) durch ein feststehendes Messer gebildet ist.

6. Vorrichtung nach einem der Ansprüche 2 bis 5, wobei die zweite Schneideinrichtung (45, 46, 47) durch ein längs einer Führung (46) bewegliches Messer (47) gebildet ist.

7. Vorrichtung nach einem der Ansprüche 2 bis 6, wobei eine weitere Siegeleinrichtung (80, 81) zur Herstellung einer zusätzlichen Versiegelung (79) im Bereich von eingefalteten Längsfalten (77) an den beiden Rändern des Folienschlauches (13) vorhanden ist.

8. Vorrichtung nach einem der Ansprüche 2 bis 7, wobei die Siegelbacke (30) und Gegenbacke (31) auf zwei gemeinsam in Vorschubrichtung (A) des Folienschlauches (13) verschiebbaren Schlitten (61) montiert sind, welche mittels zweier Gewindespindeln (61) synchron miteinander bewegbar sind.

9. Folienbeutel, hergestellt auf einer Vorrichtung gemäss Anspruch 7, wobei der Beutel (48) in der Draufsicht rechteckig und an einem seiner Schmalränder gefaltet ist und längs seinen beiden Längsrändern zwei Flossen-Siegelnähte (78) aufweist, und wobei der Beutel (48) eine eingefaltete Bodenfalte (77) und im Bereich dieser Bodenfalte (77) eine zusätzliche bogenförmige Versiegelung (79) aufweist.

10. Folienbeutel nach Anspruch 9, wobei die Folie aus mehreren Schichten besteht, von welchen die innerste den tiefsten Schmelzpunkt hat, und wobei die Aussenseite der Folie im Bereich der Bodenfalten nicht verschweisst ist.

## Claims

1. A method of making bags (48), more particularly for food or drinks, from a tubular film (13) withdrawn from a supply reel (11), wherein the tubular film (13) is first transversely sealed and then separated into two halves along its longitudinal centre and the bags (48) are finally separated from the tube (13) by a cut in the region of the transverse sealing seams, and wherein the tubular film (13) is drawn off stepwise.

2. Apparatus for performing the method according to claim 1, comprising:
- a holder (10) to receive a supply reel (11) of a tubular film (13),
- a storage unit (17) for storing a tubular film portion,
- a transverse sealing jaw (30) and co-acting jaw (31) for making a sealing seam (78) transversely of the length of the tubular film (13),
- a first cutting device (40) disposed downstream of the transverse sealing jaw (30) for separating the tubular film (13) along its longitudinal centre,
- a draw-off roller (26) disposed downstream of the first cutting device (40) and a pressure roller (25) pressed against the draw-off roller (26), wherein the draw-off roller (26) is connected to an intermittent drive (27, 28),
- a second cutting device (45, 46, 47) disposed downstream of the draw-off roller (26) for separating the bag (48) centrally through the sealing seams (78), and
- a means (50) for the simultaneous discharge of a pair of bags (48) in each case.

3. Apparatus according to claim 2, wherein the intermittent drive (27, 28) is formed by a motor (29) and a pneumatic clutch (27).

4. Apparatus according to claim 2 or 3, wherein the sealing jaw (30) is followed by a cooling jaw (32).

5. Apparatus according to any one of claims 2 to 4, wherein the first cutting device (40) is formed by a stationary knife.

6. Apparatus according to any one of claims 2 to 5, wherein the second cutting device (45, 46, 47) is formed by a knife (47) movable along a guide (46).

7. Apparatus according to any one of claims 2 to 6, wherein another sealing device (80, 81) is provided for making an additional seal (79) in the region of folded-in longitudinal folds (77) at the two edges of the tubular film (13).

8. Apparatus according to any one of claims 2 to 7, wherein the sealing jaw (30) and the co-acting jaw (31) are mounted on two carriages (61) jointly movable in the direction of advance (A) of the tubular film (13) and movable in synchronism with one another by means of two screw spindles (61).

9. A film bag made on an apparatus according to claim 7, wherein the bag (48) is rectangular in plan view and is folded at one of its narrow edges and has two finned sealing seams (78) along its two longitudinal edges, and wherein the bag (48) has a folded-in bottom fold (77) and, in the region of this bottom fold (77), an additional arcuate seal (79).

10. A film bag according to claim 9, wherein the film consists of a plurality of layers, the innermost one of which has the lowest melting point, and wherein the outside of the film is not welded in the region of the bottom folds.

## Revendications

1. Procédé de fabrication de sachets (48),en particulier pour des mets ou des boissons, à partir d'un tube (13), fait d'une feuille et tiré d'un rouleau de stockage (11), dans lequel on scelle tout d'abord transversalement le tube fait d'un feuille (13), puis on le sépare en deux moitiés le long de son axe longitudinal et enfin, au moyen d'une coupe, on détache les sachets (48) d'avec le tube (13) dans la zone des cordons de scellement transversal, et dans lequel on tire pas à pas le tube fait d'une feuille (13).

2. Dispositif pour la mise en oeuvre du procédé selon la revendication 1, comportant:
- un support (10) pour recevoir un rouleau de stockage (11) d'un tube fait d'une feuille (13),
- un magasin (17) pour emmagasiner un tronçon de tube fait d'une feuille,
- un mors (30) de scellement transversal et un contre-mors (31) pour réaliser un cordon de scellement (78) transversalement à l'extension longitudinale d'un tube fait d'une feuille (13),
- un premier dispositif de coupe (40), disposé en aval du mors (30) de scellement transversal pour séparer le tube fait d'une feuille (13) le long de son axe longitudinal,
- un rouleau de tirage (26), disposé en aval du premier dispositif de coupe (40) et un rouleau de pression (25), exerçant une pression contre le rouleau de tirage, le rouleau de tirage (26) étant relié à un mécanisme d'entraînement intermittent (27, 28),
- un second dispositif de coupe (45, 46, 47), disposé en aval du rouleau de tirage (26), pour détacher les sachets (48) par le milieu des cordons de scellement (118), et
- un dispositif (50) pour évacuer chaque fois simultanément deux sachets (48).

3. Dispositif selon la revendication 2, dans lequel le mécanisme d'entraînement intermittent (27, 28) est formé par un moteur (29) et par un embrayage pneumatique (27).

4. Dispositif selon la revendication 2 ou 3, dans lequel un mors de refroidissement (32) est monté en aval du mors de scellement (30).

5. Dispositif selon l'une des revendications 2 à 4, dans lequel le premier dispositif de coupe (40) est formé par un couteau fixe.

6. Dispositif selon l'une des revendications 2 à 5, dans lequel le second dispositif de coupe (45, 46, 47)) est formé par un couteau (47) mobile le long d'un guidage (46).

7. Dispositif selon l'une des revendications 2 à 6, dans lequel il y a un autre dispositif de scellement (80, 81) pour réaliser un scellement supplémentaire (119) dans la zone des plis longitudinaux (77) pliés vers l'intérieur, le long des deux bords du tube fait d'une feuille (13).

8. Dispositif selon l'une des revendications 2 à 7, dans lequel le mors de scellement (30) et le contre-mors (31) sont montés sur deux chariots (31) qui peuvent coulisser en commun dans la direction d'avance (A) du tube fait d'une feuille (13) et peuvent se déplacer en synchronisme l'un avec l'autre au moyen de deux broches filetées (61).

9. Sachet fait d'une feuille, fabriqué sur un dispositif conforme à la revendication 7, le sachet (48) étant rectangulaire en vue de dessus et plié le long de l'un de ses petits côtés et présentant, le long de ses deux grands côtés deux cordons de scellement (78) en aileron, et le sachet (48) présentant un pli de fond (77) plié vers l'intérieur et, dans la zone de ce pli de fond (77), un scellement supplémentaire en forme d'arc (119).

10. Sachet fait d'une feuille selon la revendication 9, la feuille étant constituée de plusieurs couches dont la plus intérieure a le point de fusion le plus bas et la face extérieure de la feuille n'étant pas soudée dans la zone des plis du fond.
